# DEMANDE DE BREVET EUROPEEN

(11) **EP 1 813 582 A1**
(43) Date de publication de la demande: **01.08.2007**
(21) Numéro de dépôt: 07103615.6
(22) Date de dépôt: 20.10.1999
(51) Int. Cl.: C03C 17/36

(54) **Substrat transparent muni d'un empilement de couches minces**

(30) Priorité: 22.10.1998 FR 9813250
(62) Demande divisionnaire de: 99402585.6
(71) Demandeur: SAINT-GOBAIN VITRAGE INTERNATIONAL, 92400 Courbevoie (FR)
(72) Inventeur: Rondeau, Véronique, 92600, ASNIERE SUR SEINE (FR); Didier, Fabrice, 52066, AACHEN (DE)
(74) Mandataire: Jamet, Vincent

(57) **Abrégé**

L'invention concerne un substrat transparent, notamment en verre, muni d'un empilement de couches minces comportant au moins une couche métallique à propriétés de réflexion dans l'infrarouge, notamment bas-émissive, disposée entre deux revêtements à base de matériau diélectrique, le revêtement sous-jacent comportant une couche de mouillage à base d'oxyde de zinc ZnO, éventuellement dopé à l'aluminium ZnO:Al, directement au contact de la couche métallique.

Selon l'invention, chacun des deux revêtements à base de matériau diélectrique comprend au moins une couche d'indice de réfraction élevé, supérieur ou égal à 2,2.

## Description

La présente invention concerne un substrat transparent, notamment en verre, muni d'un empilement de couches minces comportant au moins une couche métallique à propriétés de réflexion dans l'infrarouge notamment bas-émissive, disposée entre deux revêtements à base de matériau diélectrique.

L'application principale visée par l'invention est l'utilisation d'un tel substrat pour la fabrication de vitrages d'isolation thermique et/ou de protection solaire.

Ceux-ci sont destinés à équiper aussi bien des bâtiments que les véhicules et ce, en particulier dans le but de diminuer l'effort de climatisation et/ou réduire une surchauffe excessive entraînée par l'importance toujours croissante des surfaces vitrées dans les pièces et habitacles.

Un type d'empilement de couches minces bien connu pour conférer à un substrat transparent des propriétés thermiques, notamment de bas-émissivité, adaptée pour l'application requise précitée, consiste en une couche métallique, notamment en argent, disposée entre deux revêtements à base de matériau diélectrique du type oxyde métallique. Cet empilement est, de manière usuelle, fabriqué à partir d'une succession de dépôts effectués selon une technique utilisant le vide comme par exemple la pulvérisation cathodique, le cas échéant assistée par un champ magnétique.

Il peut être également prévu dans cet empilement une couche ayant un rôle de protection afin d'éviter la dégradation de l'argent.

Dans ce type d'empilement, la couche d'argent détermine essentiellement les performances thermiques, anti-solaires et/ou de bas-émissivité du vitrage final, tandis que les couches de matériau diélectrique agissent avant tout sur l'aspect optique du vitrage obtenu de manière interférentielle. En outre, elles ont un rôle de protection de la couche d'argent contre les agressions chimiques et/ou mécaniques.

Jusqu'à ce jour, les améliorations apportées aux vitrages munis d'empilements du type précité ont permis d'augmenter leur champ d'application, tout en leur permettant de conserver un niveau de performances thermiques et optiques satisfaisant.

Cependant, sur ce dernier point, les performances thermiques pourraient être encore améliorées, en particulier avec l'obtention d'un coefficient K d'isolation diminué.

Le but de l'invention est alors de proposer un substrat muni d'un empilement de couches minces du type précité, aux performances thermiques améliorées, sans que cela se fasse au détriment de ses performances optiques.

Pour ce faire, l'invention a pour objet un substrat transparent, notamment en verre, muni d'un empilement de couches minces comportant au moins une couche métallique à propriétés de réflexion dans l'infrarouge, notamment bas-émissive, disposée entre deux revêtements à base de matériau diélectrique, le revêtement sous-jacent comportant une couche de mouillage à base d'oxyde de zinc ZnO, éventuellement dopé à l'aluminium ZnO:Al, directement au contact de la couche métallique.

Selon l'invention, chacun des deux revêtements à base de matériau diélectrique comprend au moins une couche d'indice de réfraction élevé, de préférence supérieur ou égal à 2,2.

On précise que, dans le cadre de l'invention, un indice de réfraction élevé signifie strictement supérieur à 2.

La combinaison selon l'invention permet d'obtenir un substrat à la fois très bas-émissif et de transmission lumineuse très élevée, performances jamais atteintes selon l'état de l'art.

En outre, l'aspect colorimétrique en réflexion du substrat reste suffisamment neutre.

Pour atteindre la solution selon l'invention, les inventeurs ont tout d'abord constaté que, conformément à l'état de l'art, il était nécessaire tout d'abord d'avoir une couche métallique suffisamment épaisse pour pouvoir atteindre une valeur d'émissivité suffisamment basse et que la présence d'oxyde de zinc ZnO comme couche de mouillage directement au contact de la couche métallique permettait justement de limiter l'épaisseur de la couche métallique précitée à une valeur de l'ordre de quelques nanomètres, typiquement de l'ordre de 15 nanomètres. Ils ont su alors mettre en évidence que, malgré la limitation de l'épaisseur de la couche d'argent apportée par la présence de l'oxyde de zinc ZnO, il n'était pas aisé d'obtenir une valeur de réflexion lumineuse R_{L} basse.

Les inventeurs ont alors pensé avoir recours à l'insertion d'un seul matériau à haut indice, effet connu en soi.

D'une manière surprenante, ils se sont aperçus que l'insertion de ce type de matériau de part et d'autre de la couche métallique non seulement optimisait l'effet anti-reflets recherché. De plus, le fait que, selon l'invention, la couche à haut indice du revêtement diélectrique supérieur ne soit pas en contact direct avec le milieu ambiant, tel que l'air, cela permet d'avoir un meilleur aspect colorimétrique en réflexion du substrat.

La couche métallique fonctionnelle est avantageusement à base d'argent. Son épaisseur peut être choisie entre 7 et 20 nanomètres, notamment entre 9 et 15 nanomètres, quand on désire obtenir des vitrages à basse émissivité et haute transmission lumineuse (notamment une T_{L} d'au moins 70 à 80 %), particulièrement pour ceux destinés à équiper des bâtiments dans des pays froids. Quand on désire des vitrages à fonction anti-solaire, réfléchissants, destinés plutôt à équiper des bâtiments dans des pays chauds, la couche d'argent peut être plus épaisse, par exemple comprise entre 20 et 25 nm (ce qui a évidemment pour conséquence d'avoir des vitrages à transmission lumineuse nettement plus faible, par exemple inférieure à 60 %).

De manière préférée, il peut être prévu que l'empilement selon l'invention, comporte une couche métallique de protection placée immédiatement au-dessus et au contact de la couche à propriétés de réflexion dans l'infrarouge.

La couche de protection prévue est avantageusement à base d'un métal unique choisi parmi le niobium Nb, le titane Ti, le chrome Cr ou le nickel Ni ou un alliage à partir à partir d'au moins deux de ces métaux, notamment d'un alliage de nickel et de chrome (Ni/Cr) et a une épaisseur géométrique inférieure ou égale à 2 nm. Selon cette variante, le métal ou l'alliage constitutif de la couche de protection peut être dopé au palladium Pd. Elle joue son rôle de couche « sacrificielle » dans le but de protéger la couche fonctionnelle en cas de dépôt de la couche suivante par pulvérisation réactive.

La couche de mouillage à base d'oxyde de zinc ZnO selon l'invention a, de préférence, une épaisseur géométrique comprise entre 5 et 40 nm, notamment entre 15 et 30 nm. Avec de telles épaisseurs, elle peut contribuer, outre sa fonction de mouillage, à ajuster l'aspect optique de l'empilement en association avec le revêtement diélectrique situé au-dessus de la couche fonctionnelle.

Avantageusement, la couche de mouillage est à base d'oxyde de zinc, au moins en partie cristallisé. Une telle couche permet de ne pas pénaliser l'empilement d'un point de vue optique en cas de traitement thermique subi par le substrat porteur tel qu'une trempe ou un bombage.

Chacune des couches à indice de réfraction élevé selon l'invention peut être disposée directement sous la couche de mouillage si elle est présente, et être avantageusement à base d'un matériau choisi parmi l'oxyde de niobium Nb₂O₅, l'oxyde de bismuth dopé au manganèse Bi₂O₃:Mn, un oxyde mixte de zinc et de titane ZnTiO_{X}, l'oxyde de titane TiO₂, un oxyde mixte de tantale et de titane TiTaO_{X}, un oxyde mixte de zirconium et de titane ZrTiO_{X}.

Parmi ces matériaux, l'oxyde de titane TiO₂ est particulièrement préféré, notamment en raison de sa compatibilité avec les autres couches de l'empilement conforme à l'invention.

Selon une variante de l'invention, le revêtement en diélectrique au-dessus de la couche métallique réfléchissante comporte une superposition de couches, dont la couche d'indice élevé supérieur ou égal à 2,2, et au moins couche dont l'indice de réfraction est faible, notamment inférieur ou égal à 1,8, notamment inférieur ou égal à 1,6. Il peut s'agir par exemple d'une couche en SiO₂, SiON, SiOAl.

Selon une autre variante, le revêtement diélectrique au-dessus de la couche métallique réfléchissante peut aussi comporter, alternativement ou cumulativement avec la première variante, une superposition de couches où la couche d'indice supérieur ou égal à 2,2 est surmontée, notamment par contact direct, par une couche d'indice moyen, notamment compris entre 1,9 et 2,1. Il peut s'agir, par exemple, d'une couche en SnO₂, Si₃N₄, AIN, ZnO.

Il est clair que ces deux variantes peuvent aussi s'appliquer similairement au revêtement diélectrique sous-jacent à la couche métallique réfléchissante.

Pour obtenir une couleur en réflexion plus neutre du substrat conforme à l'invention, le revêtement à base de matériau diélectrique disposé au-dessus de la couche métallique comporte la séquence de couches déposées dans l'ordre suivant :
a) couche(s) à matériau(x) d'indice de réfraction nᵢ₋₂ d'au plus 2,2, notamment inférieur à 2,2, notamment compris entre 1,9 et 2,1 (par exemple SnO₂, Si₃N₄, AIN, ZnO) ;
b) couche(s) à matériau(x) d'indice de réfraction nᵢ₋₁ inférieur d'au moins 0,3 à celui nᵢ de la ou les dernière(s) couche(s) ; d'indice notamment inférieur à 1,8 ou 1,6 (par exemple SiO₂, SiON, SiOAl) ;
c) dernière(s) couche(s) à matériau(x) d'indice de réfraction nᵢ sensiblement égal à nᵢ₋₂ (à nouveau, notamment, en SnO₂, Si₃N₄, AlN).

Dans ce cas de figure, avantageusement, il y a la couche d'indice élevé du type Ti02 qui se trouve disposée entre la couche métallique réfléchissante et la séquence de couches a), b), c). Les revêtements diélectriques multicouches sont avantageux, car en jouant sur les différences d'indices entre les couches, en alternant notamment des couches à haut et bas indice, on peut obtenir des propriétés d'isolation thermique excellentes qui ne sont pas obtenues au détriment des propriétés optiques. Ces revêtements multicouches permettent d'améliorer encore l'aspect en réflexion extérieure du vitrage.

A titre d'illustration préférée, un empilement répondant aux critères de l'invention est du type :
Verre/TiO₂ ou Nb₂O₅ ou ZnTiO_{X}/ZnO/Ag/Ti ou Nb/TiO₂ ou Nb₂O₅ ou ZnTiO_{X}/SnO₂ ou Si₃N₄ ou (ZnO/Si₃N₄) ou (SnO2/SnZnO_{X})
Le Si₃N₄ peut être remplacé par de l'AIN ou par un nitrure mixte Si-AI.

Le substrat précédemment défini est remarquable en ce qu'il présente une émissivité ε d'au plus 0,025.

L'invention concerne également un vitrage multiple bas-émissif ou anti-solaire, notamment double vitrage, comportant le substrat décrit ci-dessus, l'empilement de couches minces étant en faces 2 et/ou 3, le cas échéant, en face 5.

L'invention concerne enfin un double vitrage bas-émissif comportant au moins un substrat précédemment défini remarquable en ce qu'il présente une transmission lumineuse T_{L} d'au moins 72 %.

Un tel double vitrage, qui comporte deux feuilles de verre, est caractérisé par un coefficient K inférieur ou égal à 1,4 W/K.m² lorsque les deux feuilles de verre sont séparées par une lame d'air ou inférieur ou égal à 1,1 W/K.m² lorsque les deux feuilles de verre sont séparées par une lame d'argon.

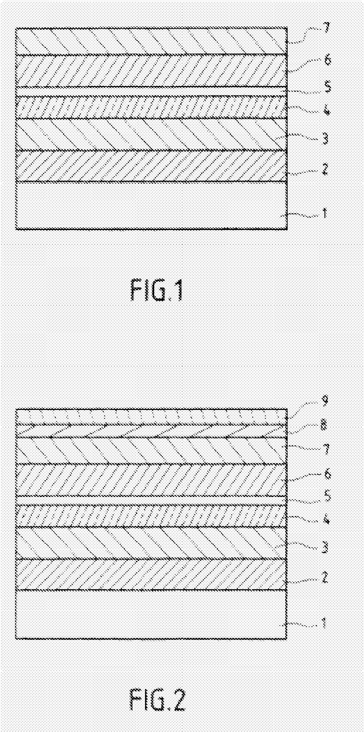

D'autres détails et caractéristiques avantageuses ressortiront ci-après à la lecture de la description détaillée des exemples suivants non limitatifs faits en référence aux figures 1 à 4.

Les exemples 1 et 2 sont réalisés conformément à l'invention.

Les exemples 3 et 4 sont donnés à titre d'exemples comparatifs.

Dans tous ces exemples, les dépôts successifs des couches minces ont été réalisés à l'aide d'une technique de pulvérisation cathodique assistée par champ magnétique. Bien évidemment, dans le cadre de l'invention, ils peuvent être réalisés par toute autre technique permettant une bonne maîtrise des épaisseurs de couches obtenues.

Les substrats sur lesquels ont été déposés les empilements de couches minces sont des substrats en verre silico-sodo-calcique clair du type de ceux commercialisés par la société SAINT-GOBAIN VITRAGE sous la dénomination « PLANILUX ».

On précise que, par souci de clarté, les différentes proportions entre les épaisseurs des matériaux n'ont pas été respectées sur les figures.

### EXEMPLE 1 - (SELON L'INVENTION)

Sur la figure 1, on voit que le substrat 1 est surmonté respectivement d'une couche 2 à base d'oxyde de titane TiO₂, d'une couche 3 de mouillage à base d'oxyde de zinc ZnO, puis d'une couche 4 en argent, d'une couche 5 de protection en titane Ti, d'une couche 6 à base d'oxyde de titane TiO₂ surmontée d'une couche 7 d'oxyde d'étain SnO₂.

L'empilement est donc du type :
Verre/TiO₂/ZnO/Ag/Ti/TiO₂/SnO₂

Le tableau 1 ci-dessous indique l'épaisseur en nanomètres, correspondant à chaque couche de l'empilement, surmontant le substrat de 4 mm d'épaisseur.

**TABLEAU 1**

| | | |
|---|---|---|
| TiO₂ | (2) | 14 |
| ZnO | (3) | 10 |
| Ag | (4) | 15 |
| Ti | (5) | 1,2 |
| TiO₂ | (6) | 8 |
| SnO₂ | (7) | 34 |

Pour réaliser cet empilement, les conditions de dépôt pour chacune des couches préconisées ont été les suivantes :
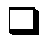 les couches 2 et 6 à base de Ti02 ont été déposées à l'aide d'une cible de titane sous une pression de 3.10⁻³ mbar, dans une atmosphère de Ar/O₂ ;
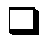 la couche 3 à base de ZnO a été déposée à l'aide d'une cible en zinc, sous une pression de 8 x 10⁻³ mbar, dans une atmosphère d'argon/oxygène ;
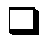 la couche 4 en argent a été déposée à l'aide d'une cible en argent, sous une pression de 8 x 10⁻³ mbar, dans une atmosphère d'argon ;
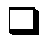 la couche 5 en Ti a été déposée à l'aide d'une cible en titane, sous une pression de 8 x 10⁻³ mbar, dans une atmosphère d'argon ;
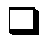 la couche 7 en SnO₂ a été déposée à l'aide d'une cible en étain sous une pression de 1,5 x 10⁻³ mbar, dans une atmosphère Ar/O₂.

Les puissances et vitesses de défilement du substrat ont été ajustées de manière connue en soi pour obtenir les épaisseurs désirées ci-dessus.

Le tableau 2 ci-dessous indique respectivement la valeur de transmission lumineuse T_{L} en pourcentage, la valeur de réflexion lumineuse R_{L} également en pourcentage, les valeurs a*(R) et b*(R), en réflexion dans le système de colorimétrie (L, a*, b*), sans unité, ainsi que la valeur d'émissivité ε, sans unité. Toutes ces mesures sont faites en référence à l'illuminant D₆₅.

**TABLEAU 2**

| Exemple 1 - (Substrat monolithique) | |
|---|---|
| T_{L} | 79,5 |
| R_{L} | 12,5 |
| a*(R) | 2,0 |
| b*(R) | - 11,7 |
| ε | 0,023 |

Le substrat 1 précédemment défini est ensuite monté en double vitrage avec un autre substrat de verre clair nu d'épaisseur géométrique égale à 4 mm avec une lame intercalaire d'argon de 15 mm d'épaisseur, l'empilement de couches minces étant en face 3.

Le tableau 3 ci-dessous reprend les mêmes caractéristiques T_{L}, R_{L}, a*(R), b*(R), ε ainsi que la valeur du coefficient K en W/K.m² du double vitrage.

**TABLEAU 3**

| Exemple 1 - (Double vitrage) | |
|---|---|
| T_{L} | 72,5 |
| R_{L} | 18,4 |
| a*(R) | 0,2 |
| b*(R) | - 7,5 |
| ε | 0,023 |
| K | 1,0 |

### EXEMPLE 2 - (SELON L'INVENTION)

L'empilement de couches minces représenté sur la figure 2 est identique à celui de l'exemple 1, à ceci près que la couche 7 à base d'oxyde d'étain SnO₂ a été recouverte d'une couche 8 à base de SiO₂ d'indice de réfraction égal à 1,45 et d'une dernière couche de l'empilement 9 à base de nitrure de silicium Si₃N₄.

L'empilement a donc la séquence suivante :
Verre/TiO₂/ZnO/Ag/Ti/TiO₂/SnO₂/SiO₂/Si₃N₄

La couche 8 à base de SiO₂ conforme à l'invention a une épaisseur de 15 nm.

Cette couche 8 à base de SiO₂ a été déposée par pulvérisation réactive assistée par plasma dans une atmosphère d'argon/oxygène à une pression d'environ 1,5 x 10⁻³ mbar.

La couche 7 à base d'oxyde d'étain SnO₂ a une épaisseur de 25 nm. Elle a été déposée de manière identique à celle (3) de l'exemple 1.

La couche 9 à base de nitrure de silicium a une épaisseur de 10 nm et a été déposée à une pression d'environ 8.10⁻³ mbar dans une atmosphère argon/azote.

L'épaisseur de la couche 6 à base de TiO₂ est de 11 nm, les autres couches ont les mêmes épaisseurs que celles relatives à l'exemple 1.

Le tableau 4 ci-dessous indique respectivement les valeurs T_{L}, R_{L}, a*(R), b*(R), ε du substrat monolithique relatif à cet exemple.

**TABLEAU 4**

| Exemple 2 - (Monolithique) | | |
|---|---|---|
| | T_{L} | 78,6 |
| | R_{L} | 14,8 |
| | a*(R) | 1,3 |
| | b*(R) | - 4,4 |
| | ε | 0,023 |

Ce substrat est ensuite monté au double vitrage avec un autre substrat de verre clair de même épaisseur, égale à 4 mm avec une lame intercalaire d'argon de 15 mm, l'empilement suivant l'invention étant en face 3 de ce double vitrage.

Le tableau 5 ci-dessous reprend les mêmes caractéristiques T_{L}, R_{L}, a*(R), b*(R), ε ainsi que la valeur du coefficient K en W/K.m² du double vitrage.

**TABLEAU 5**

| Exemple 2 - (Double vitrage) | |
|---|---|
| T_{L} | 71,7 |
| R_{L} | 20,2 |
| a*(R) | - 0,2 |
| b*(R) | - 2,6 |
| ε | 0,023 |
| K | 1,0 |

### EXEMPLE 3 - (COMPARATIF)

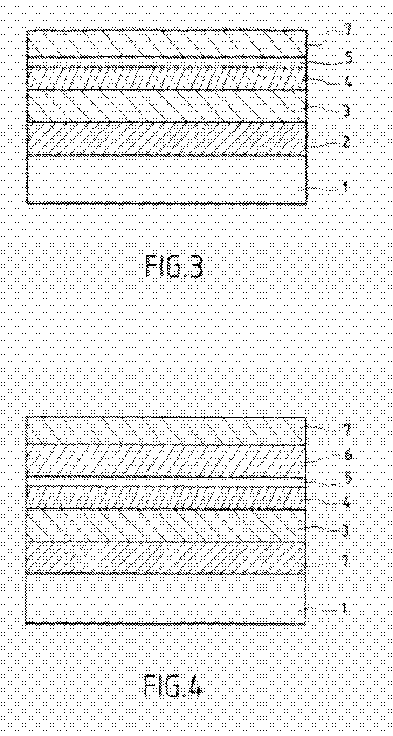

L'empilement de couches minces représenté sur la figure 3 est identique à celui de l'exemple 1, à ceci près qu'il comporte une seule couche à base de TiO₂ conforme à l'invention.

Cette couche est comprise dans le revêtement diélectrique sous-jacent à la couche à base d'argent Ag.

L'empilement a donc la séquence suivante :
Verre/TiO₂/ZnO/Ag/Ti/SnO₂

Le tableau 6 ci-dessous indique respectivement les valeurs T_{L}, R_{L}, a*(R), b*(R), ε du substrat monolithique relatif à cet exemple.

**TABLEAU 6**

| Exemple 3 - (Monolithique) | |
|---|---|
| T_{L} | 76,0 |
| R_{L} | 16,9 |
| a*(R) | 2,3 |
| b*(R) | - 6,4 |
| ε | 0,023 |

Ce substrat est ensuite monté au double vitrage avec un autre substrat de verre clair de même épaisseur, égale à 4 mm avec une lame intercalaire d'argon de 15 mm, l'empilement suivant l'invention étant en face 3 de ce double vitrage.

Le tableau 7 ci-dessous reprend les mêmes caractéristiques T_{L}, R_{L}, a*(R), b*(R), ε ainsi que la valeur K en W/K.m² du double vitrage.

**TABLEAU 7**

| Exemple 3 - (Double vitrage) | |
|---|---|
| T_{L} | 69,7 |
| R_{L} | 22,5 |
| a*(R) | 0,8 |
| b*(R) | - 4,8 |
| ε | 0,023 |
| K | 1,0 |

### EXEMPLE 4 - (COMPARATIF)

L'empilement de couches minces représenté sur la figure 4 est identique à celui de l'exemple 1 selon l'invention, à ceci près qu'il comprend une seule couche à base de TiO₂ présente dans le revêtement diélectrique sur la couche d'argent Ag.

L'empilement a donc la séquence suivante :
Verre/SnO₂/ZnO/Ag/Ti/TiO₂/SnO₂

Le tableau 8 ci-dessous indique respectivement les valeurs T_{L}, R_{L}, a*(R), b*(R), ε du substrat monolithique relatif à cet exemple.

**TABLEAU 8**

| Exemple 4 - (Monolithique) | |
|---|---|
| T_{L} | 71,8 |
| R_{L} | 19,8 |
| a*(R) | 2,8 |
| b*(R) | - 9,2 |
| ε | 0,023 |

Ce substrat est ensuite monté au double vitrage avec un autre substrat de verre clair de même épaisseur, égale à 4 mm avec une lame intercalaire d'argon de 15 mm, l'empilement suivant l'invention étant en face 3 de ce double vitrage.

Le tableau 9 ci-dessous reprend les mêmes caractéristiques T_{L}, R_{L}, a*(R), b*(R), ε ainsi que la valeur du coefficient K en W/K.m² du double vitrage.

**TABLEAU 9**

| Exemple 4 - (Double vitrage) | |
|---|---|
| T_{L} | 66,2 |
| R_{L} | 24,9 |
| a*(R) | 1,1 |
| b*(R) | - 7,1 |
| ε | 0,023 |
| K | 1,0 |

## Revendications

1. Substrat transparent, notamment en verre, muni d'un empilement de couches minces comportant au moins une couche métallique à propriétés de réflexion dans l'infrarouge, notamment bas-émissive, disposée entre deux revêtements à base de matériau diélectrique, le revêtement sous-jacent comportant une couche de mouillage à base d'oxyde de zinc ZnO, éventuellement dopé à l'aluminium ZnO:Al, directement au contact de la couche métallique, **caractérisé en ce que** chacun des deux revêtements à base de matériau diélectrique comprend au moins une couche d'indice de réfraction élevé, supérieur ou égal à 2,2.

2. Substrat selon la revendication 1, **caractérisé en ce que** la couche métallique à propriétés de réflexion dans l'infrarouge est à base d'argent.

3. Substrat selon la revendication 1 ou 2, **caractérisé en ce que** la couche métallique à propriétés de réflexion dans l'infrarouge a une épaisseur géométrique comprise entre 7 et 20 nanomètres, notamment entre 9 et 15 nanomètres, de manière à lui conférer des propriétés de bas-émissivité ou comprise entre 20 et 25 nanomètres de manière à lui conférer des propriétés anti-solaires.

4. Substrat selon l'une des revendications 1 à 3, **caractérisé en ce qu'**il comporte une couche métallique de protection placée immédiatement au-dessus et au contact de la couche à propriétés de réflexion dans l'infrarouge.

5. Substrat selon la revendication 4, **caractérisé en ce que** ladite couche métallique de protection est à base d'un métal unique choisi parmi le niobium Nb, le titane Ti, le chrome Cr ou le nickel Ni ou d'un alliage d'au moins deux de ces métaux, notamment d'un alliage de nickel et de chrome (Ni/Cr) **et en ce qu'**elle a de préférence une épaisseur géométrique inférieure ou égale à 2 nanomètres.

6. Substrat selon l'une des revendications précédentes, **caractérisé en ce que** la couche de mouillage a une épaisseur géométrique comprise entre 5 et 40 nanomètres, notamment entre 15 et 30 nanomètres.

7. Substrat selon l'une des revendications précédentes, **caractérisé en ce que** la couche de mouillage est à base d'oxyde de zinc, au moins en partie cristallisé.

8. Substrat selon l'une quelconque des revendications précédentes, **caractérisé en ce que** chacune des couches d'indice de réfraction élevé est à base d'un matériau choisi parmi l'oxyde de niobium Nb₂O₅, l'oxyde de bismuth dopé au manganèse Bi₂O₃:Mn, un oxyde mixte de zinc et de titane ZnTiO_{X}, l'oxyde de titane TiO₂, un oxyde mixte de tantale et de titane TaTiO_{X}, un oxyde mixte de zirconium et de titane ZrTiO_{X}.

9. Substrat selon l'une des revendications précédentes, **caractérisé en ce que** le revêtement diélectrique au-dessus de la couche métallique réfléchissante comporte une superposition de couches, dont la couche d'indice supérieur ou égal à 2,2 et une couche dont l'indice de réfraction est inférieur ou égal à 1,8, notamment inférieur à 1,6.

10. Substrat selon la revendication 9, **caractérisé en ce que** la couche à indice inférieur ou égal à 1,8 est à base de SiO₂, SiON, ou SiOAl.

11. Substrat selon l'une des revendications précédentes, **caractérisé en ce que** le revêtement diélectrique au-dessus de la couche métallique réfléchissante comporte une superposition de couches dont la couche d'indice supérieur ou égal à 2,2 surmontée d'une couche d'indice inférieur, notamment d'indice compris entre 1,9 et 2,1, comme SnO₂, Si₃N₄, AIN, ZnO.

12. Substrat selon l'une quelconque des revendications précédentes, **caractérisé en ce que** le revêtement à base de matériau diélectrique disposé au-dessus de la couche métallique comporte la séquence de couches déposées dans l'ordre suivant :
a) couche(s) à matériau(x) d'indice de réfraction nᵢ₋₂ d'au plus 2,2, notamment inférieur à 2,2 ou compris entre 1,9 et 2,1 ;
b) couche(s) à matériau(x) d'indice de réfraction nᵢ₋₁ inférieur d'au moins 0,3 à celui nᵢ de la ou les dernière(s) couche(s), notamment inférieur à 1,8 ;
c) dernière(s) couche(s) à matériau(x) d'indice de réfraction nᵢ sensiblement égal à nᵢ₋₂.

13. Substrat selon la revendication 12, **caractérisé en ce qu'**il y a la couche d'indice de réfraction supérieur ou égal à 2,2, du type Ti02, disposée entre la couche métallique réfléchissante et la séquence de couches a), b), c).

14. Substrat selon l'une quelconque des revendications 1 à 8, **caractérisé en ce que** l'empilement est le suivant :
Verre/TiO₂ ou Nb₂O₅ ou ZnTiO_{X}/ZnO/Ag/Ti ou Nb/TiO₂ ou Nb₂O₅ ou ZnTiO_{X}/SnO₂ ou Si₃N₄ ou (ZnO/Si₃N₄)

15. Substrat selon l'une quelconque des revendications précédentes, **caractérisé en ce qu'**il présente une émissivité d'au plus 0,025.

16. Vitrage multiple bas-émissif ou anti-solaire, notamment double vitrage, comportant le substrat selon l'une quelconque des revendications précédentes, l'empilement de couches minces étant en faces 2 et/ou 3 et, le cas échéant, en face 5.

17. Double vitrage bas-émissif comportant au moins un substrat selon l'une quelconque des revendications 1 à 13, **caractérisé en ce qu'**il présente une transmission lumineuse T_{L} d'au moins 72 %.

18. Double vitrage selon la revendication 17 comportant deux feuilles de verre, **caractérisé en ce qu'**il présente un coefficient K inférieur ou égal à 1,4 W/K.m² lorsque les deux feuilles de verre sont séparées par une lame d'air, ou inférieur ou égal à 1,1 W/K.m² lorsque les deux feuilles de verre sont séparées par une lame d'argon.
